# EUROPEAN PATENT SPECIFICATION

(11) **EP 2 803 442 B1**
(45) Date of publication and mention of the grant of the patent: **17.10.2018**
(21) Application number: 13735603.6
(22) Date of filing: 11.01.2013
(51) Int. Cl.: B32B 15/01, C22C 21/02, C22C 21/00, B23K 35/02, B23K 35/40, B23K 35/28

(54) **BRAZING SHEET FOR FLUX-FREE BRAZING AND METHOD FOR PRODUCING SAME**
LÖTBLECH ZUM FLUSSMITTELFREIEN LÖTEN UND HERSTELLUNGSVERFAHREN DAFÜR
TÔLE À BRASAGE POUR PERMETTRE UN BRASAGE SANS FLUX ET PROCÉDÉ DE PRODUCTION DE CETTE DERNIÈRE

(30) Priority: 13.01.2012 JP 2012004897
(43) Date of publication of application: 19.11.2014
(73) Proprietor: UACJ Corporation, Tokyo 100-0004 (JP)
(72) Inventor: SUZUKI, Yoshikazu, Tokyo 100-0004 (JP); GOTOU, Akihito, Tokyo 100-0004 (JP); YANAGAWA, Yutaka, Tokyo 100-0004 (JP)
(74) Representative: Weickmann & Weickmann PartmbB
(86) International application number: PCT/JP2013/050404
(87) International publication number: WO 2013/105637

(56) References cited:
- WO-A1-2008/155067
- WO-A1-2010/000666
- WO-A2-2011/034496
- WO-A2-2011/046499
- JP-A- H05 154 693
- JP-A- H11 140 574
- JP-A- H11 172 357
- JP-A- H11 285 817
- JP-A- 2001 300 762
- JP-A- 2003 071 588
- JP-A- 2003 126 986
- US-A- 3 917 151
- US-A- 4 635 842

## Description

### BACKGROUND OF THE INVENTION

### FIELD OF THE INVENTION

The present invention relates to an aluminum alloy brazing sheet that is useful for production of structures and the like for a heat exchanger and electronic device cooling. In particular, the present invention relates to an aluminum alloy brazing sheet to enable stable brazing joining without use of a flux under a non-oxidizing gas atmosphere, and relates to a method for manufacturing the same.

### DESCRIPTION OF THE RELATED ART

An aluminum alloy brazing sheet is used in production of structures and the like for a heat exchanger and electronic device cooling. The aluminum alloy brazing sheet is a clad sheet in which a brazing material made of an Al-Si based alloy or the like is provided on a core material made of an Al-Mn based alloy or the like, and therefore joined to a joint member with the brazing material. Among brazing methods applying an aluminum alloy brazing sheet, Nocolok method (NB method), which is performed with use of a flux in a furnace under a non-oxidizing gas atmosphere such as nitrogen, has become the current mainstream. Since the furnace under a non-oxidizing gas atmosphere in the NB method is more easily used as a continuous production facility than a vacuum furnace or the like, and is therefore excellent in mass productivity. This is the reason why the furnace under a non-oxidizing gas atmosphere is widely used.

However, the NB method has several problems. For example, in the NB method, brazing joining is available with destruction of an oxide film on the surface of aluminum with a flux, but the flux may lose its effect since it reacts with Mg to become a substance having a high melting point. Therefore, the problem is that the flux is not suitable for brazing of an Al alloy to which Mg is added. Furthermore, other problems are that the cost of the flux and its coating process is high and that a residue of the flux is present on the surface of the joining portion or other surfaces after the treatment.

Thus, there has been studied a flux-free brazing technology that enables brazing joining without use of a flux in the furnace under a non-oxidizing gas atmosphere. Patent Literature 1 discloses a brazing sheet comprising: an Al-Si-Mg based alloy brazing material as an intermediate; a core material made of an Al alloy having a higher melting point than that of the brazing material; and a thin skin material made of an Al alloy having a melting point higher than that of the brazing material. And the literature also discloses a technology that enables a flux-free brazing with the brazing sheet.

In this brazing joining in the case of applying the brazing sheet for flux-free brazing equipped with the thin skin material, a filler alloy seeps out from a grain boundary or the like of the thin skin material during melt of the filler alloy, and then Mg contained in the brazing material modifies the surface of an aluminum alloy as a counterpart material, and thereby wet spreading of the filler alloy is ensured without a flux to allow for a good joint. In this prior art, a pure aluminum based alloy or the like containing no Mg is preferable as the thin skin material, and it is required that formation of Mg oxide on the surface is suppressed before the filler alloy is melted and then the filler alloy can immediately seep out from a grain boundary or the like during melt of the filler alloy. Such a brazing sheet having a protective coating is also fabricated through a usual method, i.e. combination of a slab of a core material with materials of the respective layers, clad joining during hot rolling, and a post-process such as cold rolling. As for an effect of this thin skin material, when a Mg-containing brazing alloy is exposed because of no thin skin material, it is expected that an oxide containing Mg is formed in large amounts on the surface during heating of the brazing and then wetting or flowing of the filler alloy is inhibited after melt of the filler alloy.

For an additional study, the present inventors have prepared the above-described brazing sheet for flux-free brazing with use of an industrial-scale hot rolling mill. As a result, it has been confirmed that flux-free brazing in a furnace under a non-oxidizing gas atmosphere is possible with a brazing sheet having the above-described configuration and that this prior art is effective in principle.

However, when tests were performed on joints having a variety of shapes in the additional study, it has been found that they are not necessarily joined stably. That is, even with a brazing sheet using a thin skin material prepared under the same condition, there was a case where brazing characteristics vary from site to site. Further, even with a brazing sheet of a thin skin material having the same configuration, it was also confirmed that there was a difference in brazing characteristics due to a difference in production lots. Such ununiformity of brazing characteristics is not frequent by any means, but it becomes a factor of quality deterioration and yield degradation of a final product such as a heat exchanger and therefore cannot be overlooked in order to ensure reliability of the brazing sheet for flux-free brazing.

US 3,917,151 (Patent Literature 2) relates to an improved magnesium source for the vacuum brazing of aluminium members, the source comprising a magnesium-containing member clad with a magnesium-free aluminium alloy. The cladding prevents the premature vaporization of the magnesium during vacuum brazing operations and also prevents the formation of a complex magnesium-containing oxide film on the magnesium source.

WO 2011/034496 A2 (Patent Literature 3) is directed to a multi layered aluminium alloy brazing sheet consisting of a core material that on either one or both sides has an intermediate layer consisting of an Al-Si braze alloy interposed between the core and a thin covering layer on top of the intermediate layer, where the said core material and the covering layer has a higher melting temperature than the Al-Si braze alloy, the covering layer containing Bi 0.01 to 1.0 wt.%, Mg ≤ 0.01 wt.%, Mn ≤ 1.0 wt.%, Cu ≤ 1.2 wt.%, Fe ≤ 1.0 wt.%, Si ≤ 4.0 wt.%, Ti ≤ 0.1 wt.%, Zr, Cr, V and/or Sc in total ≤ 0.2 wt.% and unavoidable impurities each in amounts less than 0.05 wt.%, and a total impurity content of less than 0.2 wt.%, the balance consisting of aluminium.

US 4,635,842 (Patent Literature 4) is directed to a process for manufacturing clad aluminium-lithium alloys. A metallurgical bond at the interface between an aluminium-lithium core alloy and a metallic liner is achieved by first forming a mechanical bond along the interface between the core and liner under moderate temperature and reduction conditions, and then heating the composite without simultaneous reduction to cause diffusion of the elements across the core-liner interface. The result is a metallurgical bond securing the layers together to form a composite which can be worked, shaped, and fabricated by normal reduction techniques into a full range of products without the discoloration and fouling problems otherwise typical of aluminium-lithium alloys.

### PRIOR ART DOCUMENTS

### PATENT LITERATURE

[Patent Literature 1] Japanese Patent No. 3780380
[Patent Literature 2] US 3,917,151
[Patent Literature 3] WO 2011/034496 A2
[Patent Literature 4] US 4,635,842

### SUMMARY OF THE INVENTION

### TECHNICAL PROBLEM

Therefore, among brazing sheets for flux-free brazing having a thin skin material, the present invention provides a brazing sheet in which uniform brazing characteristics are secured and stable joining is possible. In addition, the present invention also provides a manufacturing method of such a brazing sheet for flux-free brazing.

### SOLUTION TO PROBLEM

The inventors have studied earnestly for solving the above problem and have considered that the main cause of the instability in joining step of the brazing sheet for flux-free brazing having a thin skin material is that a variation develops in a clad rate of the thin skin material and thereby irregularities develop in the thickness of the thin skin material. To explain this variation in clad rate, as described below, a range of thickness of the thin skin material is 5 to 30 µm, but a clad rate set to the thin skin material having such a thickness may be a significantly lower value depending on the entire thickness of the brazing sheet. For example, the clad rate of the brazing sheet having a thickness of 3.0 mm is 1% or less, and it is required to control the thickness of the thin skin in such a low clad rate. In this regard, in production on an industrial scale, it is expected difficult to maintain the low clad rate as described above over the entire thin skin material. Therefore, clad rate differs, although localized, from site to site, and a bias occurs in the thickness of the thin skin material. Then, when the bias occurs in the thickness of the thin skin material, ease of bleeding of filler alloy is different by site and, as a result, a difference is generated in soundness of the joint, which is considered a problem of the prior art.

Thus, the present inventors have studied the reason why it is difficult to form a thin skin material having a low clad rate. Consequently, it has been found that presence of an oxide existing at the interface between the thin skin material and the Al-Si-Mg brazing material is largely involved. Then, as a result of further various studies, the present inventors have reached the invention of the present application relating to a brazing sheet that enables stable flux-free brazing under a non-oxidizing gas atmosphere with control of the amount of an oxide between the thin skin material and the brazing material.

The invention of the present application is a brazing sheet for flux-free brazing that comprises: a core material; a brazing material disposed on at least one surface of the core material; and a thin skin material disposed on the brazing material. The brazing sheet for flux-free brazing is characterized in that: the core material is made of an aluminum alloy having a higher melting point than that of the brazing material, wherein the aluminium alloy is a 3000 series alloy or a 6000 series alloy of the JIS alloy classification; the brazing material is made of an Al-Si-Mg based alloy containing 5 to 13 mass% of Si, 0.2 to 1.5 mass% of Mg, 0.001 to 0.1 mass% of Ti, 0.0001 to 0.02 mass% of B and up to 0.6 mass% of Fe as an unavoidable impurity, and optionally 0.01 to 0.5 mass% of Bi, 0.1 to 5% of Zn, 0.01 to 0.1% of In, 0.01 to 0.1% of Sn and 0.05 to 0.5% of Cu, and has a thickness of 25 to 250 µm; the thin skin material is made of an aluminum alloy being a pure Al based alloy or an Al-Mn based alloy, having a higher melting initiation temperature than the brazing material and having Mg controlled to less than 0.05 mass%, and has a thickness of 5 to 30 µm; and a content of oxides of aluminium and magnesium present at the interface between the brazing material and the thin skin material is 0.1 ppm or less in weight ratio with respect to the entire clad material.

The present invention will be explained in detail. Herein, "%" for material composition means "mass%." The brazing sheet for flux-free brazing according to the present application is composed of a thin skin material, a brazing material and a core material. Each component will be explained in detail below.

First, the thin skin material will be explained. The thin skin material serves as a protective layer that prevents formation of an oxide film containing a large amount of Mg oxide on the surface during manufacture of the brazing sheet or heating of brazing. In addition, an Al-Si-Mg melting filler alloy seeping out from grain boundaries or the like of this thin skin material contributes to joining a joint at a melting initiation temperature of the filler alloy. The thin skin material is finally melted into the filler alloy.

A raw material of the thin skin material is a pure Al based alloy or an Al-Mn based alloy because of having a higher melting initiation temperature than that of the Al-Si-Mg filler alloy (about 580°C). The raw material is not especially limited, but 1080, 1070, 1050, 1100 or 3003 alloy or the like of the JIS alloy code can be used. Further, it is required that the thin skin material contains substantially no Mg. When Mg is contained, an oxide film containing a large amount of Mg oxide is formed to inhibit the brazing characteristics. However, it is accepted to contain less than 0.05% that is a general acceptable amount of an unspecified impurity element.

An appropriate range of the thickness of the thin skin material is 5 to 30 µm. When the thickness is less than 5 µm, Mg is easily diffused from the brazing material during heating of the brazing to form a large amount of Mg-containing oxide on the surface of the thin skin material, and thereby flowing of the filler alloy is inhibited. In contrast, when the thickness of the thin skin material is more than 30 µm, a variation in joining may be caused since an unmelted portion of the thin skin material remains during brazing.

Further, the thin skin material having a small variation in thickness by site is preferred. It is preferable that a variation in thickness of the thin skin material in the same material is controlled within 30% of the average thickness.

Next, the brazing material will be explained. The brazing material of the present invention is made of an Al-Si-Mg based alloy and disposed inside of the thin skin material. The alloy composition of the brazing material contains 5 to 13% of Si and 0.2 to 1.5% of Mg.

Si lowers a melting point and is an essential element providing characteristics required for a filler alloy. When the content is less than 5%, brazing flowability is decreased. Meanwhile, more than 13% of Si may cause formation of coarse Si particles in the texture of the brazing material to partially erode a core material or a counterpart material to be joined during brazing.

Mg has effects of breaking an oxide film or of lowering the oxygen content in the immediate vicinity of the joining portion by seeping out from the thin skin material and then evaporating during melt of a brazing material. Because of the above effects, Mg is an essential element that enables flux-free brazing. In the case of less than 0.2% of Mg, the effects are inadequate. When Mg is more than 1.5%, a large amount of oxide containing Mg tends to be formed at the interface of the brazing material and thin skin material during hot rolling for manufacturing of a clad material (brazing sheet), and this oxide may cause a variation in thickness of the thin skin material.

Further, 0.01 to 0.5% of Bi may be added to the brazing material in addition to Mg and Si. Bi has an effect of improving brazing flowability, and the effect cannot be obtained in the case of less than the above range, and even if an amount more than the range is added, further improvement in brazing flowability does not occur.

Furthermore, the brazing material may contain Zn: 0.1 to 5%, In: 0.01 to 0.1%, Sn: 0.01 to 0.1% and Cu: 0.05 to 0.5%. These are elements added as appropriate in order to adjust an electrical potential of the brazing material after brazing and to obtain an anticorrosive effect. Even if these elements are added in the above range, the brazing characteristics are secured.

Also, 0.001 to 0.1% of Ti and 0.0001 to 0.02% of B are added as a grain refiner agent during aluminum casting. Besides this, it is acceptable that the brazing material contains up to 0.6% of Fe as an unavoidable impurity.

The thickness of the brazing material is 25 to 250 µm. In the case of less than 25 µm, brazing joining becomes insufficient due to lack in a filler alloy. Meanwhile, the thickness exceeding 250 µm is not appropriate since erosion of a core material or a counterpart material due to the excessive filler alloy becomes remarkable. The thin skin material melts into the filler alloy during brazing, and therefore it is preferable that the brazing material is fully thicker than the thin skin material, and not less than five times thickness is specifically preferable.

The present invention is characterized by regulating the above-described oxide present at the interface between the thin skin material and the brazing material. This oxide existing at the interface between the Al-Si-Mg based alloy brazing material and the thin skin material is derived from an oxide film that has existed on the surface of the brazing material and the thin skin material before clad joining with hot rolling in a manufacturing process of the brazing sheet. To be more specific on this point, a hot-rolled sheet or a continuous cast rolled sheet is used as an original material, which is subjected to clad joining, of both the brazing material and thin skin material, but a high temperature oxide film is originally formed on the surface of the above rolled sheet, and this oxide film is grown during preheating of hot rolling. Especially in the Al-Si-Mg alloy brazing material, the oxide film tends to grow thicker because an oxide containing Mg is formed.

In the case of a large amount of the oxide at the interface between the brazing material and the thin skin material, a variation develops in the timing of joining by site during clad rolling. In other words, during performance of a multistage clad rolling, a site joined with a certain rolling pass and a site that is not joined are generated. Then, in a subsequent rolling pass, a difference occurs in deformation between these sites. This difference in deformation leads to a difference in clad rate and causes a variation in thickness of the thin skin material. Thus, this oxide at the interface causes a variation in brazing joining.

Therefore, in the brazing sheet for flux-free brazing of the present invention, a weight ratio of the oxide existing at the interface between the brazing material and the thin skin material with respect to the entire clad material is controlled to 0.1 ppm or less. Thereby, a variation in thickness of the thin skin material and a variation in brazing joining are prevented. This control of the amount of the oxide allows for ensuring stability of flux-free brazing joining especially even in the case of a brazing sheet with a thickness of 2 mm or more possessing a thin skin material with a clad rate of less than 1%.

The amount of the oxide present at the interface between the brazing material and the thin skin material can be calculated as follows: for example, both surfaces of the clad material are subjected to mechanical polishing or ion milling to be a sample having a thickness of 0.1 mm or less and including a joining interface; and this sample is subjected to a quantitative analysis of oxides of aluminum and magnesium with the iodine methanol method. Then, the weight ratio can be obtained with conversion of the calculated amount of the oxide into a weight ratio on the basis of the initial sample weight before polishing.

The core material is made of an aluminum alloy having a higher melting point than that of the brazing material, wherein the 3000 series alloys of the JIS alloy classification (Al-Mn based alloy) such as 3003, 3005 and 3004 are suitable. Further, the 6000 series alloys (Al-Mg-Si based alloy) are also applicable.

As described above, the present invention is a brazing sheet in which the brazing material and thin skin material are disposed on the core material, and may have a three-layer structure in which the two former materials are disposed on one surface of the core material or may have a five-layer structure in which the thin skin material and brazing material are disposed on both surfaces of the core material. It is preferable that the thickness of the brazing sheet according to the present invention is 0.4 to 6 mm. However, especially in this range, the present invention is effective for improving the brazing characteristics and decreasing the variation when the plate thickness is more than 2 mm.

Next, a method for manufacturing the brazing sheet for flux-free brazing according to the present invention will be explained. The manufacturing method according to the present invention is basically the same as the above-described manufacturing process of the conventional brazing sheet for flux-free brazing. It is general that, in the method for manufacturing the brazing sheet for flux-free brazing, there are provided a rolled sheet of the core material, a rolled sheet of the Al-Si-Mg based alloy brazing material and a rolled sheet of the thin skin material, and then these rolled sheets are clad joined. The following step is adopted as steps of the clad joining of the respective rolled sheets: a step in which a rolled sheet of the core material, a rolled sheet of the Al-Si-Mg based alloy brazing material and a rolled sheet of the thin skin material are stacked simultaneously and hot-rolled to join the rolled sheets. Alternatively, the following steps are adopted: a pre-cladding step in which a rolled sheet of the Al-Si-Mg based alloy brazing material and a rolled sheet of the thin skin material are stacked and hot-rolled to prepare a pre-clad material; and a step in which the pre-clad material and a rolled sheet of the core material are stacked and hot-rolled to join them. Further, in the brazing sheet for flux-free brazing according to the present invention, an amount of the oxide at the interface between the brazing material and the thin skin material is controlled. The brazing sheet according to the present invention can be manufactured with the specific embodiments described below while the method is based on the above conventional manufacturing process.

The first manufacturing method according to the present invention comprises a step of stacking and hot rolling a rolled sheet of a core material, a rolled sheet of an Al-Si-Mg based alloy brazing material and a rolled sheet of a thin skin material in order to join the sheets. In this method, the Al-Si-Mg based alloy brazing material is subjected to a treatment for mechanically or chemically removing a surface oxide on the surface in contact with the thin skin material before the stacking and rolling.

In this manufacturing method, an oxide on the surface of the rolled sheet of the Al-Si-Mg based alloy brazing material in contact with the thin skin material is removed before the stacking and hot rolling, and thereby the amount of the oxide at the interface is decreased. This manufacturing method has not only an effect of removing an oxide film already formed on the surface of the Al-Si-Mg based alloy brazing material but also an effect of delaying growth of a surface oxide film (particularly a surface oxide film including Mg) on the rolled sheet of the Al-Si-Mg based alloy brazing material during preheating of the subsequent hot rolling

As the rolled sheet to be an original material of the thin skin material and brazing material, normally used are those prepared in a way that an ingot with a semi-continuous casting method is hot-rolled in an usual manner. Further, there is no problem even with use of a continuous casting rolled sheet with a process using a twin roll caster, a belt caster, a block caster or the like. Then, the core material ingot is prepared with semi-continuous casting in a normal manner, and it is possible to use a sheet material subjected to facing and rolling after pretreatment such as homogenization as appropriate.

A specific method of oxide film removal applies cutting or polishing with a brush or the like as a mechanical method. Further, as a chemical method, etching with an acid or alkali may be applied. Among these, a chemical method is more effective. When cutting is performed, it is preferable to use chemical etching in combination in order to eliminate influence of adhesion of cutting oil.

Another form of the manufacturing process of the brazing sheet according to the present invention is based on a method comprising: a pre-cladding step in which a rolled sheet of an Al-Si-Mg based alloy brazing material and a rolled sheet of a thin skin material are stacked and hot-rolled to prepare a pre-clad material; and a step of stacking and hot rolling the pre-clad material and a core material to join the materials. Further, the manufacturing process comprises performing a treatment to the Al-Si-Mg based alloy brazing material for mechanically or chemically removing an oxide film on the surface in contact with the thin skin material before the pre-cladding step.

This manufacturing method is a method of decreasing an amount of the oxide at the interface with removal of an oxide film on the rolled sheet surface of the Al-Si-Mg based alloy brazing material before the pre-cladding step. As with the above first method, the effect of removing an oxide film formed on the surface of the brazing material and removing an oxide film before the pre-cladding step allows for delaying growth of the oxide film during preheating of the subsequent hot rolling.

In a specific removal method of the oxide film in the above method, the oxide film removal treatment as described above is performed. In addition, facing of the ingot may be performed together, but it is preferable to combine chemical etching thereafter.

Herein, as a rolled sheet to be an original material of the thin skin material and the brazing material, a rolled sheet of the ingot produced with a continuous casting or semi-continuous casting as described above is applicable. A sheet similar to the above can be also used as a rolled sheet of the core material

Further, in both of the above-described two manufacturing methods, preheating prior to hot rolling is carried out. The preheating can be carried out in a normal air atmosphere furnace, but preheating under a dehumidified atmosphere at a dew point of 5°C or lower is preferable in the sense of preventing growth of an oxide at the interface between the brazing material and thin skin material. As examples of the atmosphere in this preheating, for example, dry air, a DX gas or a nitrogen gas may also be flowed into the furnace.

The preheating temperature is 400 to 490°C, and a holding time within this temperature range is 1 to 6 hours. When preheating at a higher temperature for a longer time is performed, it is not appropriate because an oxide film on the surface of the Al-Mg-Si filler alloy grows excessively. In addition, it is desirable to bring the thin skin material and brazing material in close contact during the preheating in order to prevent excessive surface oxidation from occurring.

Then, in both of the above two manufacturing methods, rolling reduction in hot rolling is set to 95% or more. In the case of less than 95%, the oxide film at the interface between the thin skin material and the brazing material is not sufficiently separated with hot rolling, and thus a void develops at the joining portion, especially surface joining portion, after brazing of the finished brazing sheet to decrease a joining rate. This is because when separation of the oxide film is insufficient, a void develops in the periphery of the oxide remaining at the surface joining portion after brazing.

The manufacturing method of the brazing sheet for flux-free brazing according to the present invention is the same as the conventional method except for the above-described removal step of the oxide film. Therefore, it is possible that cold rolling and/or annealing or the like are combined before or after the cladding step to obtain a brazing sheet of a desired thickness and thermal refining. Further, it is possible to perform leveling, trimming, slitting, cutting and the like as appropriate.

In the joining step using the brazing sheet for flux-free brazing according to the present invention, after the brazing sheet is combined with a joined counterpart material to be made up, brazing is performed without a flux under a non-oxidizing gas atmosphere. The brazing sheet and the counterpart material may be formed to a required shape with a press or the like. Each material before brazing is preferably washed in order to remove oil or the like from the surface. Nitrogen or an inert gas may be used as an atmosphere gas for brazing, and it is preferred that an oxygen concentration in a brazing furnace is set to 100 ppm or less. As the brazing furnace, it is possible to apply a nitrogen atmosphere furnace for Nocolok brazing that is a kind of industrially prevalent flux brazing. The brazing temperature is preferably 590 to 610°C.

### ADVANTAGEOUS EFFECT OF INVENTION

As described above, the brazing sheet for flux-free brazing according to the present invention controls the amount of the oxide existing at the interface between the thin skin material and the brazing material. Thereby, stable joining becomes possible in flux-free brazing under a non-oxidizing gas atmosphere.

### BRIEF DESCRIPTION OF THE DRAWING

[Fig. 1] Fig. 1 is a diagram illustrating a shape of a joint for evaluating brazing characteristics of the brazing sheet in each of Examples and Comparative Examples.

### DETAILED DESCRIPTION OF THE PREFERRED EMBODIMENT

The embodiment of the present invention will be described based on Examples described below. In this embodiment, while plurality of core materials, brazing materials and thin skin materials were combined and manufacturing conditions were adjusted, brazing sheets for flux-free brazing were manufactured and their joining characteristics were evaluated.

First, for each component of the core materials, brazing materials and thin skin materials, alloy ingots having the composition in Table 1 were prepared with a semi-continuous casting method.

**[Table 1]**

| mass % | | | | | | | | | | | | |
|---|---|---|---|---|---|---|---|---|---|---|---|---|
| Alloy | Si | Mg | Bi | Cu | Mn | Zn | In | Sn | Ti | B | Fe | Al |
| S1 | 0.15 | 0.01 | - | 0.01 | - | 0.01 | - | - | 0.02 | 0.002 | 0.31 | Balance |
| S2 | 0.29 | - | - | 0.12 | 1.17 | - | - | - | 0.01 | 0.001 | 0.55 | Balance |
| C1 | 0.30 | - | - | 0.14 | 1.15 | - | - | - | 0.01 | 0.001 | 0.53 | Balance |
| C2 | 0.28 | 0.94 | - | 0.02 | 1.03 | - | - | - | 0.01 | 0.001 | 0.51 | Balance |
| C3 | 0.36 | 0.62 | - | 0.21 | 0.01 | - | - | - | 0.01 | 0.001 | 0.41 | Balance |
| F1 | 5.42 | 1.05 | 0.09 | 0.20 | - | - | - | - | 0.005 | 0.0005 | 0.35 | Balance |
| F2 | 10.05 | 1.03 | - | - | - | - | - | - | 0.01 | 0.001 | 0.41 | Balance |
| F3 | 12.72 | 0.99 | - | - | - | - | - | - | 0.003 | 0.0002 | 0.36 | Balance |
| F4 | 9.86 | 0.25 | - | - | - | - | - | - | 0.01 | 0.001 | 0.36 | Balance |
| F5 | 9.88 | 0.50 | - | - | - | - | - | - | 0.05 | 0.005 | 0.38 | Balance |
| F6 | 10.13 | 1.48 | 0.32 | - | - | - | - | - | 0.01 | 0.001 | 0.35 | Balance |
| F7 | 8.56 | 0.76 | - | - | - | 1.53 | - | - | 0.01 | 0.001 | 0.36 | Balance |
| F8 | 10.01 | 0.49 | 0.10 | - | - | 4.26 | - | - | 0.01 | 0.001 | 0.40 | Balance |
| F9 | 9.70 | 1.00 | 0.20 | - | - | 2.01 | - | 0.05 | 0.01 | 0.001 | 0.33 | Balance |
| F10 | 9.89 | 0.94 | - | - | - | 0.49 | 0.05 | 0.06 | 0.01 | 0.001 | 0.41 | Balance |
| F11* | 9.82 | 0.07 | - | - | - | - | - | - | 0.01 | 0.001 | 0.35 | Balance |
| F12* | 9.87 | 2.05 | - | - | - | - | - | - | 0.01 | 0.001 | 0.36 | Balance |
| F13* | 3.20 | 1.02 | - | - | - | - | - | - | 0.01 | 0.001 | 0.34 | Balance |
| F14* | 17.55 | 1.04 | - | - | - | - | - | - | 0.01 | 0.001 | 0.39 | Balance |

| | | | | | | | | | | | | |
|---|---|---|---|---|---|---|---|---|---|---|---|---|
| S: Thin skin material C: Core material F: Brazing material * not according to the invention | | | | | | | | | | | | |

In manufacturing the brazing sheet, a core material ingot was subjected to a homogenization treatment, and the upper and lower surfaces were subjected to facing. As for the brazing material, an ingot was hot-rolled to adjust its thickness. As for the thin skin material, an ingot was hot-rolled and cool-rolled to adjust its thickness. Then, the respective members having an adjusted thickness was used to prepare brazing sheets of the combinations in Table 2 in the two manufacturing processes "a" and "b" described below. The thicknesses of the thin skin material and the brazing material were measured with an optical microscope. Incidentally, a three-layer material is a material in which the filler alloy and the thin skin were joined on only one surface, and a five-layer material is a material in which the filler alloy and the thin skin were joined on both surfaces of the core material. In the five-layer material, each thickness of the filler alloy and the thin skin is set to the same on both surfaces.
- Manufacturing method a: After a core material ingot, a brazing material subjected to the oxide film removal step described later and a thin skin material were combined and preheated, hot rolling was performed to prepare a clad material. The conditions of the preheating of hot rolling were to maintain at 430 to 475 °C for 1 to 2 hours. In some of the conditions, dry air with a dew point of -5°C or lower was flowed into the furnace.
- Manufacturing method b: a thin skin material and a brazing material subjected to the oxide film removal step described later were preheated and hot-rolled to make a pre-clad material. Thereafter, the pre-clad material was further combined with a core material and hot rolling was performed to prepare a predetermined clad material. The condition of the preheating of each hot rolling was to maintain at 460°C for 2 hours.

The plate thickness after the hot rolling was set to 5.0 mm. For some samples, characteristics as a brazing sheet were tested with use of this hot-rolled material. The other samples were cold-rolled to a final thickness to be 0 materials with annealing at 380°C × 1 hour.

In Examples of the present invention, there is performed a treatment for removing a surface film of the Al-Si-Mg alloy brazing material after the thickness is adjusted. The following was carried out as its method: (1) etching with sodium hydroxide solution and nitric acid desmut; (2) sulfuric acid etching; and (3) mechanical polishing. The detailed condition of each method is as follows.
(1) Etching with sodium hydroxide solution and nitric acid desmut
   Immersion in 10 g/L of sodium hydroxide solution (55°C) for 30 seconds, and desmutting with 250 g/L of nitric acid, and thereafter washing with water and drying;
(2) Sulfuric acid etching
   Immersion in 50 g/L of sulfuric acid (60°C) for 60 seconds and thereafter washing with water and drying; and
(3) Mechanical polishing
   Surface polishing with a steel wire brush and thereafter the sulfuric acid etching similar to (2).

Samples of the brazing sheet were collected from eight positions in the length direction of the final rolled sheet and the center and positions of 40 mm from both ends of the rolled sheet in the width direction (total 24 positions). Thicknesses of the thin skin material and the brazing material were measured with an optical microscope. The original materials for evaluation in Examples 1 to 8 and Comparative Examples 1 to 6 had a width of 500 mm and a length of 60 to 80 m. In Examples 9 and 10 and Comparative 7, the original materials had a width of 1000 mm and a length of 200 m or more. In Comparative 8, the original material had a width of 250 mm and a length of 10 m.

As for a weight ratio of the oxide on the brazing sheet, both surfaces were polished while the interface between the thin skin material and the brazing material on one surface was included to prepare a foil sample of 0.09 to 0.1 mm, and oxides of aluminum and magnesium were extracted from the foil sample with an iodine methanol method, and then quantitative analysis was carried out. The amount of the oxide was converted into a weight ratio with respect to the initial sample weight before the polishing.

After the joint joining as shown in Fig. 1 is performed, brazing characteristics of the respective brazing sheets are evaluated based on a joining rate (a rate of a portion other than voids) of the joining surface having a contact length L and based on a degree of formation of a fillet. The brazing is conducted in a nitrogen gas atmosphere having an oxygen concentration of 20 to 50 ppm or less with heating of 600°C × 5 min. The brazing sheet and the counterpart material were degreased with solvent washing. After drying, they were made up to a predetermined sample shape and then fixed with a stainless-steel jig to be subjected to a brazing test. After brazing of 24 joint specimens of each material, based on texture observation of a cross section of the center in the width direction of the adhered potion, a joining rate was calculated as a rate (%) of a portion except voids. As for evaluation criteria, a joining rate of 96% or more was defined as OK. Further, it was examined whether, among the 24 samples, the fillet at the periphery of the adhered portion was present uninterruptedly over the entire circumference, and then evaluation was performed based on the number of uninterrupted samples. In this evaluation, the case that the fillet is sound was defined as OK in all samples. The results of this brazing characteristics evaluation are shown in Table 2.

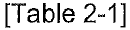

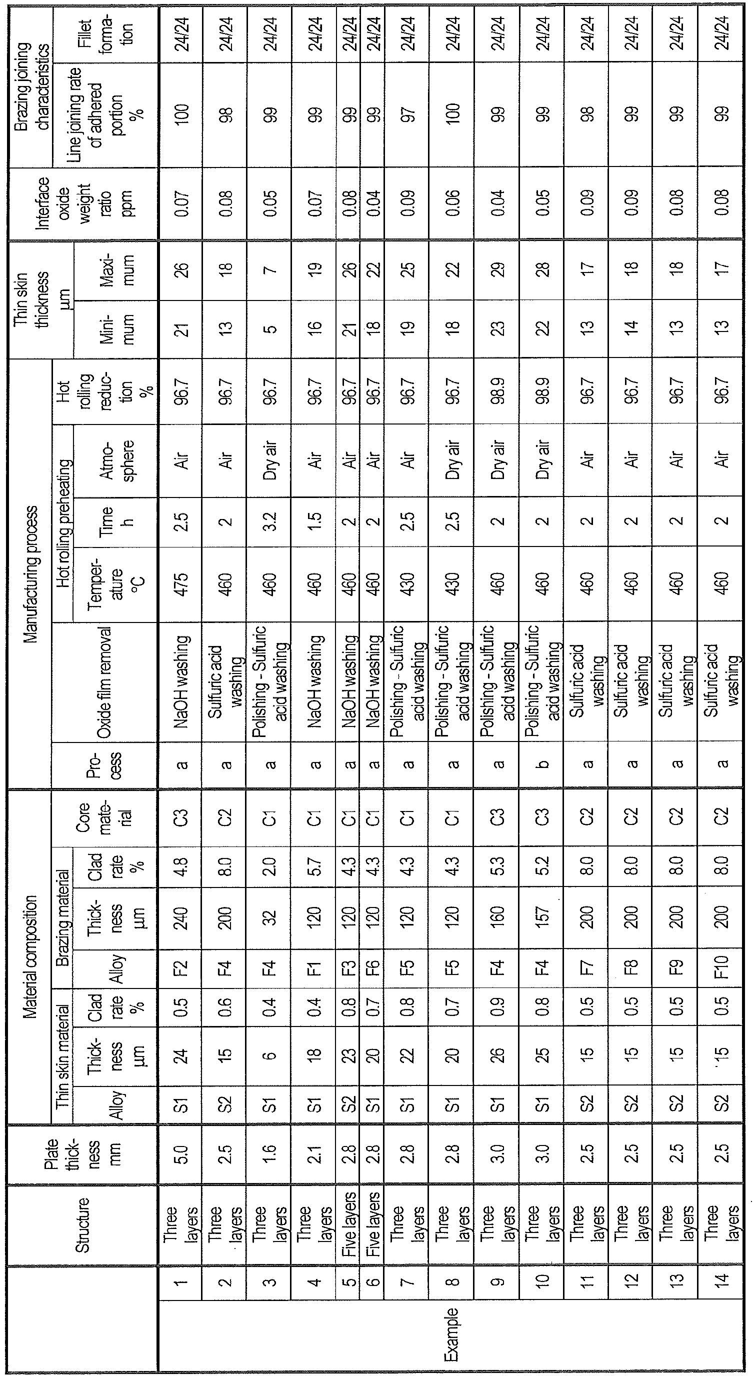

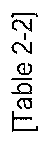

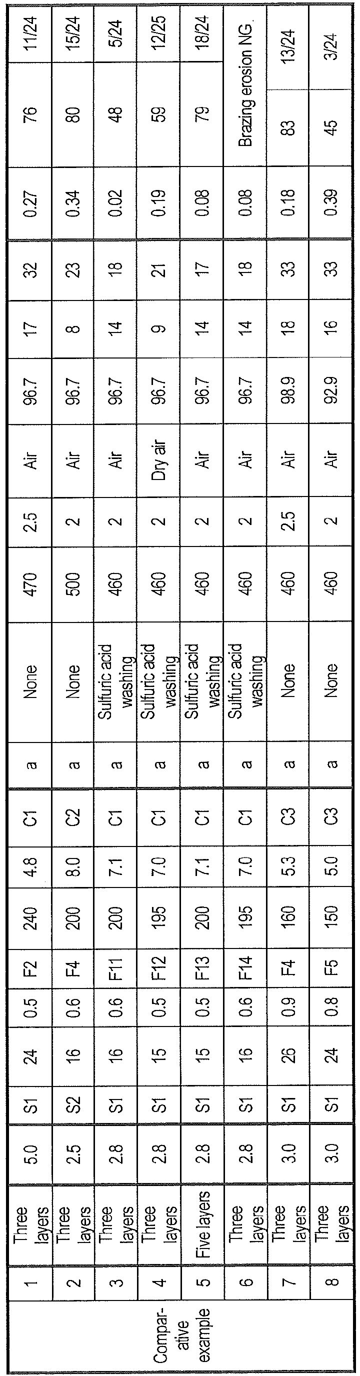

Based on these evaluation results, in all of the brazing sheets according to Examples 1 to 14, the content of the oxide existing at the interface between the brazing material and the thin skin material was 0.1 ppm or less. These brazing sheets also had good uniformity in thickness of the thin skin material because of the decreased oxide content. The difference between the maximum and minimum thicknesses was about 0.2% or less with respect to all of the brazing sheets. These Examples were also excellent in the brazing characteristics, and the joining rate and soundness of joining portion (fillet forming) were good. Meanwhile in Comparative Examples 1, 2, 7 and 8 in which the oxide content exceeds 0.1 ppm, there were variations in thickness of the thin skin material, and the brazing joining characteristics were also not preferable.

In view of composition of the brazing material, Mg concentration and Si concentration of the brazing material were set within the suitable range in Examples 1 to 14, and preferable brazing joining characteristics were shown. On the other hand, it was found from the results of Comparative Examples 3 and 4 that the joining characteristics were inferior when the Mg concentration in the composition of the brazing material was out of the suitable range, and further it was found from the results of Comparative Examples 5 and 6 that defective joining occurred in the Si concentration lower than the suitable range while erosion due to the brazing material occurred in the concentration higher than the suitable range and, also in this case, the brazing characteristics were inferior. In Examples 1, 6 and 11 to 14, there were applied the brazing materials to which Bi, Zn, In, Sn and Cu are added as an additive element, but these additive elements did not adversely affect the brazing joining characteristics and therefore it was confirmed that the respective brazing sheets had good joining characteristics.

Further, in view of effectiveness of the oxide film removal treatment in the manufacturing process, because the joining characteristics were good in Examples 1 to 14 in which the oxide film removal treatment was appropriately performed and because the oxide content at the interface was so high as to cause inferior joining characteristics in Comparative Examples 1, 2, 7 and 8, effectiveness of the oxide film removal treatment can be confirmed. Furthermore, there is a tendency that the oxide content is lowered with application of a low oxidizing dry air as a condition of the preheating before hot rolling. However, since the oxide content is sufficiently low even in the atmosphere, it is considered that atmosphere of the preheating has high flexibility. Incidentally, the two following methods were performed as the manufacturing process: a method in which the core material, the brazing material and the thin skin material were stacked and rolled (Method a); and a method via a pre-clad material (Method b). However, either method is not superior to the other and therefore it can be confirmed that both of them are useful.

### INDUSTRIAL APPLICABILITY

The present invention is a brazing sheet for flux-free brazing having uniform brazing characteristics without flux. The present invention is useful for manufacture of brazed structures for a heat exchanger or the like, and the present invention enables stable joining in the manufacture thereof and contributes to ensuring product quality.

## Claims

1. A brazing sheet for flux-free brazing, comprising:
a core material;
a brazing material disposed on at least one surface of the core material; and
a thin skin material disposed on the brazing material,
wherein:
the core material is made of an aluminum alloy having a higher melting point than that of the brazing material, wherein the aluminium alloy is a 3000 series alloy or 6000 series alloy of the JIS alloy classification;
the brazing material is made of an Al-Si-Mg based alloy containing 5 to 13 mass% of Si, 0.2 to 1.5 mass% of Mg, 0.001 to 0.1 mass% of Ti, 0.0001 to 0.02 mass% of B and up to 0.6 mass% of Fe as an unavoidable impurity, and optionally 0.01 to 0.5 mass% of Bi, 0.1 to 5 mass% of Zn, 0.01 to 0.1 mass% of In, 0.01 to 0.1 mass% of Sn and 0.05 to 0.5 mass% of Cu;
and the brazing material has a thickness of 25 to 250 µm;
the thin skin material is made of an aluminum alloy being a pure Al based alloy or an Al-Mn based alloy, having a higher melting initiation temperature than that of the brazing material and having Mg controlled to less than 0.05 mass%, and has a thickness of 5 to 30 µm;
the thin skin material and the brazing material are joined with clad rolling; and
a content of oxides of aluminum and magnesium present at an interface between the brazing material and the thin skin material is 0.1 ppm or less in weight ratio with respect to the entire clad material.

2. A method for manufacturing the brazing sheet for flux-free brazing, said brazing sheet defined in claim 1, comprising:
a step of stacking and hot rolling a core material, a rolled sheet of an Al-Si-Mg based alloy brazing material and a rolled sheet of a thin skin material in order to join the sheets, wherein a rolling reduction in the hot rolling is set to 95% or more, and
a step of preheating prior to hot rolling at a temperature of 400 to 490 °C with a holding time within this temperature range of 1 to 6 h,
wherein the method subjects the Al-Si-Mg based alloy brazing material to a treatment for mechanically or chemically removing a surface oxide film on a surface in contact with the thin skin material before the stacking and rolling, wherein the treatment is any of: (1) etching with sodium hydroxide solution and nitric acid desmut; (2) sulfuric acid etching; or (3) mechanical polishing and thereafter sulfuric acid etching.

3. A method for manufacturing the brazing sheet for flux-free brazing, said brazing sheet defined in claim 1, comprising:
a pre-cladding step where a rolled sheet of an Al-Si-Mg based alloy brazing material and a rolled sheet of a thin skin material are stacked and hot-rolled to prepare a pre-clad material;
a step of stacking and hot-rolling the pre-clad material and a core material to join the materials,
wherein a rolling reduction in the hot rolling is set to 95% or more, and
a step of preheating prior to hot rolling at a temperature of 400 to 490 °C with a holding time within this temperature range of 1 to 6 h,
wherein the method subjects the Al-Si-Mg based alloy brazing material to a treatment for mechanically or chemically removing a surface oxide film on a surface in contact with the thin skin material before the pre-cladding step, wherein the treatment is any of: (1) etching with sodium hydroxide solution and nitric acid desmut; (2) sulfuric acid etching; or (3) mechanical polishing and thereafter sulfuric acid etching.

## Patentansprüche

1. Lötblech für fließmittelfreies Löten, umfassend:
ein Kernmaterial;
ein Lötmaterial, das auf mindestens einer Oberfläche des Kernmaterials angeordnet ist;
und
ein dünnes Hautmaterial, das auf dem Lötmaterial angeordnet ist, worin
das Kernmaterial hergestellt ist aus einer Aluminiumlegierung mit einem höheren Schmelzpunkt als der des Lötmaterials, worin die Aluminiumlegierung eine Legierung der 3000-Reihe oder eine Legierung der 6000-Reihe der JIS-Legierungsklassifizierung ist;
das Lötmaterial hergestellt ist aus einer Legierung auf Al-Si-Mg-Basis, enthaltend 5 bis 13 Masse-% Si, 0,2 bis 1,5 Masse-% Mg, 0,001 bis 0,1 Masse-% Ti, 0,0001 bis 0,02 Masse-% B und bis zu 0,6 Masse-% Fe als unvermeidbare Verunreinigung und optional 0,01 bis 0,5 Masse-% Bi, 0,1 bis 5 Masse-% Zn, 0,01 bis 0,1 Masse-% In, 0,01 bis 0,1 Masse-% Sn und 0,05 bis 0,5 Masse-% Cu;
und wobei das Lötmaterial eine Dicke von 25 bis 250 µm hat;
das Hautmaterial hergestellt ist aus einer Aluminiumlegierung, die eine rein auf Al basierende Legierung oder eine auf Al-Mn basierende Legierung ist, mit einer höheren Schmelzinitiierungstemperatur als die des Lötmaterials, und worin Mg auf weniger als 0,05 Masse-% festgelegt ist, und welche eine Dicke von 5 bis 30 µm aufweist;
das Hautmaterial und das Lötmaterial durch Walzplattieren verbunden werden;
und
mit einem Gehalt von Aluminium- und Magnesiumoxiden, die an der Grenzfläche zwischen dem Lötmaterial und dem Hautmaterial vorliegen, der im Gewichtsverhältnis 0,1 ppm oder weniger ist, bezogen auf das gesamte Plattierungsmaterial.

2. Verfahren zur Herstellung des in Anspruch 1 definierten Lötblechs für fließmittelfreies Löten, umfassend:
einen Schritt des Stapelns und Warmwalzens eines Kernmaterials, eines gewalzten Blechs eines Lötmaterials aus einer Legierung, die auf Al-Si-Mg basiert, und eines gewalzten Blechs aus einem dünnen Hautmaterial, um die Bleche zu verbinden, worin eine Walzverringerung beim Warmwalzen auf 95% oder mehr eingestellt wird, und
einen Schritt des Vorerwärmens vor dem Warmwalzen bei einer Temperatur von 400 bis 490 °C mit einer Haltezeit in diesem Temperaturbereich von 1 bis 6 h,
worin das Verfahren das Lötmaterial aus einer Legierung, die auf Al-Si-Mg basiert, einer Behandlung zum mechanischen oder chemischen Entfernen einer Oberflächenoxidschicht auf einer Oberfläche, die in Kontakt mit dem Hautmaterial ist, vor dem Stapeln und Walzen unterzieht, worin die Behandlung eine ist, ausgewählt aus: (1) Ätzen mit einer Natriumhydroxidlösung und Salpetersäure-Desmut; (2) Schwefelsäureätzen; oder (3) mechanisches Polieren und danach Schwefelsäureätzen.

3. Verfahren zum Herstellen des Lötblechs zum fließmittelfreien Löten, wobei das Lötblech wie in Anspruch 1 definiert ist, umfassend:
einen Vorplattierungsschritt, in welchem ein gewalztes Blech aus einem Lötmaterial aus einer Legierung, die auf Al-Si-Mg basiert, und ein gewalztes Blech aus einem dünnen Hautmaterial gestapelt werden und warmgewalzt werden, um ein vorplattiertes Material herzustellen;
einen Schritt des Stapelns und Warmwalzens des vorplattierten Materials und eines Kernmaterials, um die Materialien zu verbinden, worin eine Walzverringerung beim Warmwalzen auf 95 % oder mehr eingestellt wird, und
einen Schritt des Vorerwärmens vor dem Warmwalzen bei einer Temperatur von 400 bis 490 °C mit einer Haltezeit in diesem Temperaturbereich im Bereich von 1 bis 6 h,
worin das Verfahren das Lötmaterial aus einer Legierung, die auf Al-Si-Mg basiert, einer Behandlung zum mechanischen oder chemischen Entfernen einer Oberflächenoxidschicht auf einer Oberfläche, die in Kontakt mit dem Hautmaterial ist, vor dem Vorplattierungschritt unterzieht, worin die Behandlung eine ist, ausgewählt aus: (1) Ätzen mit einer Natriumhydroxidlösung und Salpetersäure-Desmut; (2) Schwefelsäureätzen; oder (3) mechanisches Polieren und danach Schwefelsäureätzen.

## Revendications

1. Tôle de brasage pour brasage sans flux, comprenant :
un matériau de coeur;
un matériau de brasage disposé sur au moins une surface du matériau de coeur; et
un matériau de peau fine disposé sur le matériau de brasage,
dans laquelle :
le matériau de coeurest constitué d'un alliage d'aluminium ayant un point de fusion plus élevé que celui du matériau de brasage, dans lequel l'alliage d'aluminium est un alliage de la série 3000 ou un alliage de la série 6000 de la classification des alliages de la norme JIS;
le matériau de brasage est constitué d'un alliage à base de Al-Si-Mg contenant 5 à 13 % en masse de Si, 0,2 à 1,5 % en masse de Mg, 0,001 à 0,1 % en masse de Ti, 0,0001 à 0,02 % en masse de B et jusqu'à 0,6 % en masse de Fe en tant qu'impureté inévitable, et facultativement 0,01 à 0,5 % en masse de Bi, 0,1 à 5 % en masse de Zn, 0,01 à 0,1 % en masse de In, 0,01 à 0,1 % en masse de Sn et 0,05 à 0,5 % en masse de Cu ;
et le matériau de brasage a une épaisseur de 25 à 250 µm;
le matériau de peau fine est constitué d'un alliage d'aluminium qui est un alliage à base de Al pur ou un alliage à base de Al-Mn, ayant une température d'initiation de fusion plus élevée que celle du matériau de brasage et ayant du Mg régulé à moins de 0,05 % en masse, et a une épaisseur de 5 à 30 µm;
le matériau de peau fine et le matériau de brasage sont joints par laminage de placage ; et
une teneur en oxydes d'aluminium et de magnésium présents à une interface entre le matériau de brasage et le matériau de peau fine est de 0,1 ppm ou moins dans un rapport en poids rapporté à l'intégralité du matériau plaqué.

2. Procédé de fabrication de la tôle de brasage pour brasage sans flux, ladite tôle de brasage étant définie dans la revendication 1, comprenant :
une étape d'empilement et de laminage à chaud d'un matériau de coeur, d'une tôle laminée d'un matériau de brasage d'alliage à base de Al-Si-Mg et d'une tôle laminée d'un matériau de peau fine afin de joindre les tôles, dans lequel une réduction de laminage dans le laminage à chaud est fixée à 95 % ou plus, et
une étape de préchauffage avant laminage à chaud à une température de 400 à 490 °C avec un temps de maintien dans cette plage de température de 1 à 6 h,
dans lequel le procédé soumet le matériau de brasage d'alliage à base de Al-Si-Mg à un traitement pour éliminer mécaniquement ou chimiquement un film d'oxyde de surface sur une surface en contact avec le matériau de peau fine avant l'empilement et le laminage,
dans lequel le traitement est l'un quelconque parmi : (1) une gravure avec une solution d'hydroxyde de sodium et un décapage à l'acide nitrique ; (2) une gravure à l'acide sulfurique ; ou (3) un polissage mécanique et ensuite une gravure à l'acide sulfurique.

3. Procédé de fabrication de la tôle de brasage pour brasage sans flux, ladite tôle de brasage étant définie dans la revendication 1, comprenant :
une étape de pré-placage où une tôle laminée d'un matériau de brasage d'alliage à base de Al-Si-Mg et une tôle laminée d'un matériau de peau fine sont empilées et laminées à chaud pour préparer un matériau pré-plaqué ;
une étape d'empilement et de laminage à chaud du matériau pré-plaqué et d'un matériau de coeur pour joindre les matériaux,
dans lequel une réduction de laminage dans le laminage à chaud est fixée à 95 % ou plus, et
une étape de préchauffage avant laminage à chaud à une température de 400 à 490 °C avec un temps de maintien dans cette plage de température de 1 à 6 h,
dans lequel le procédé soumet le matériau de brasage d'alliage à base de Al-Si-Mg à un traitement pour éliminer mécaniquement ou chimiquement un film d'oxyde de surface sur une surface en contact avec le matériau de peau fine avant l'étape de pré-placage,
dans lequel le traitement est l'un quelconque parmi : (1) une gravure avec une solution d'hydroxyde de sodium et un décapage à l'acide nitrique ; (2) une gravure à l'acide sulfurique ; ou (3) un polissage mécanique et ensuite une gravure à l'acide sulfurique.
